# EUROPÄISCHE PATENTSCHRIFT

(11) **EP 2 790 849 B1**
(45) Veröffentlichungstag und Bekanntmachung des Hinweises auf die Patenterteilung: **21.09.2016**
(21) Anmeldenummer: 12783979.3
(22) Anmeldetag: 06.11.2012
(51) Int. Cl.: B21H 5/02, F16H 25/22

(54) **PLANET FÜR EINEN PLANETENWÄLZGEWINDETRIEB**
PLANET FOR A PLANETARY ROLLING-CONTACT SCREW
PLANÉTAIRE POUR UN VIS D'ENTRAÎNEMENT À ROULEMENT PLANÉTAIRE

(30) Priorität: 16.12.2011 DE 102011088905
(43) Veröffentlichungstag der Anmeldung: 22.10.2014
(73) Patentinhaber: Schaeffler Technologies AG & Co. KG, 91074 Herzogenaurach (DE)
(72) Erfinder: GREDY, Horst, 91097 Oberreichenbach (DE); EICHENHÜLLER, Bernd, 91058 Erlangen (DE)
(86) Internationale Anmeldenummer: PCT/EP2012/071889
(87) Internationale Veröffentlichungsnummer: WO 2013/087299

(56) Entgegenhaltungen:
- DE-A1-102010 011 819
- DE-A1-102010 011 820
- DE-B3-102008 008 013
- JP-A- 61 269 948

## Beschreibung

Planetenwälzgewindetriebe finden zunehmend Anwendung in der Antriebstechnik. Eine Relativdrehung zwischen der Spindelmutter und der Gewindespindel wird umgewandelt in eine Axialverschiebung zwischen der Spindelmutter und der Gewindespindel. Zwischen der Gewindespindel und der Spindelmutter sind über den Umfang verteilt angeordnete Planeten vorgesehen, die unter der Relativdrehung an der Gewindespindel und an der Spindelmutter abwälzen.

Aus DE102010011819 war ein Planetenwälzgewindetrieb nach den Merkmalen des Oberbegriffs des Anspruchs 1 bekannt. Der Planet weist einen entlang seiner Planetenachse im Durchmesser größeren Mittelabschnitt und axial zu beiden Seiten des Mittelabschnitts je einen im Durchmesser kleineren Endabschnitt auf, wobei an der Mantelfläche des Planeten im Mittelabschnitt ein erstes Eingriffprofil und in den Endabschnitten jeweils ein zweites Eingriffsprofil ausgebildet ist. Die Planeten sind mit ihrem ersten Eingriffsprofil in Wälzeingriff mit einem schraubenförmig um die Spindelachse gewundenen Gewinde der Gewindespindel. Die Planeten sind mit ihrem zweiten Eingriffseinprofil in Wälzeingriff mit einem mutterseitigen Eingriffsprofil der Spindelmutter.

Das erste Eingriffsprofil der Planeten weist eine Vielzahl von ringförmig um die Planetenachse angeordneten ersten Zähnen auf, wobei zwischen aufeinander folgenden ersten Zähnen jeweils eine ringförmig um die Planetenachse angeordnete erste Rille für einen Gewindeeingriff der Gewindes der Gewindespindel ausgebildet ist, wobei den Zähnen des Mittelabschnitts jeweils eine Zahnkontur zugeordnet ist. Diese ersten Rillen werden auch als Vorschubrillen bezeichnet, weil der Wälzeingriff mit der Gewindespindel den relativen Vorschub zwischen Gewindespindel und Spindelmutter ermöglicht. Das zweite Eingriffsprofil weist eine Vielzahl von ringförmig um die Planetenachse angeordneten zweiten Zähnen auf, wobei zwischen aufeinander folgenden zweiten Zähnen jeweils eine ringförmig um die Planetenachse angeordnete zweite Rille ausgebildet ist. Diese zweiten Rillen werden auch als Führungsrillen bezeichnet, weil die Planeten mit diesen zweiten Rillen in Wälzeingriff mit dem mutterseitigen Eingriffsprofil sind und auf einer Kreisbahn um die Spindelachse herum in der Spindelmutter geführt werden.

Im Betrieb des Planetenwälzgewindetriebes können die Planeten mit Axialkräften beaufschlagt werden, die über die Eingriffsprofile zwischen der Spindelmutter und der Gewindespindel übertragen werden. Wenn Zahnspitzen an den Zähnen der Eingriffsprofile abbrechen, ist ein einwandfreier Betrieb des Planetenwälzgewindetriebes gestört.

Aufgabe der Erfindung war es, einen für einen Planetenwälzgewindetrieb geeigneten Planeten anzugeben, der diesen Nachteil vermeidet.

Erfindungsgemäß wurde diese Aufgabe dadurch gelöst, dass die beiden an den Enden des Mittelabschnitts gelegenen ersten Randzähne innerhalb und mit Abstand zu der Zahnkontur der ersten Zähne des Mittelabschnitts ausgebildet sind. Die ersten Zähne haben einen Nutzabschnitt, der für einen Wälzeingriff mit der Gewindespindel genutzt werden kann. Dieser Nutzabschnitt reicht von der Zahnspitze in Richtung auf den Zahnfuß, jedoch nicht bis zu einem Rillengrund der Rille, in die das Gewinde der Gewindespindel eingreift. Der Nutzabschnitt erstreckt sich über den Überlappungsbereich der einander überlappenden erste Zähne der Planeten und des Gewindes der Gewindespindel. Der erste Randzahn ist innerhalb dieses Nutzabschnittes der ersten Zähne innerhalb und Abstand zu der genannten Zahnkontur angeordnet. Der erste Randzahn ist mit Bezug auf die Zahnkontur der ersten Zähne also unterfüllt. Diese Unterfüllung kann sich von der Zahnspitze bis zum Zahnfuß oder dem Rillengrund der benachbarten Rille erstrecken, so dass der erste Randzahn vollständig innerhalb und mit Abstand zu der zugeordneten Zahnkontur ausgebildet ist.

Die Erfindung hat erkannt, dass eine gezielte Verkleinerung des Randzahns zumindest im Nutzabschnitt der ersten Zähne erheblich zu einem einwandfreien Betrieb des Planetenwälzgewindetriebes beiträgt. Der erste Randzahn wird demzufolge nicht oder nicht voll belastet im Wälzkontakt der Planeten mit der Gewindespindel. Das Risiko eines Versagens des Randzahns ist deutlich reduziert.

Abschnitte der Zahnflanken von erfindungsgemäßen ersten Randzähnen, die schon aufgrund der Anordnung von Planet und Gewindespindel zueinander nicht in Wälzkontakt mit der Gewindespindel kommen können, die also außerhalb des Nutzabschnittes liegen, können die den ersten Zähnen zugeordnete Zahnkontur tangieren oder durchstoßen. In bevorzugter Weise können die ersten Randzähne jedoch innerhalb der den ersten Zähnen zugeordneten Zahnkontur und mit Abstand dazu angeordnet sein, also von der Zahnspitze bis zum Zahnfuß.

Die Wälzkontaktbahn kann im Längsschnitt durch den Planeten gesehen einen Punkt an der Zahnflanke bezeichnen, so dass die Wälzkontaktbahn eine ringförmig geschlossene Linie bildet. Die Wälzkontaktbahn kann im Längsschnitt durch den Planeten gesehen als Linie entlang der Zahnflanke ausgebildet sein, so dass die Wälzkontaktbahn eine ringförmig geschlossene Fläche bezeichnet. Der Wälzkontakt zwischen den Wälzpartnern an der Wälzkontaktbahn kann punktförmig oder linienförmig sein.

Die gezielt vorgenommene Unterfüllung hat insbesondere bei den umformenden Fertigungsverfahren Bedeutung. Wenn erfindungsgemäße Planeten in einem Walzverfahren gewalzt werden, wird das Walzprofil des Werkzeugs im Bereich des ersten Randzahn entsprechend vorbereitet. Der in dem Walzvorgang umzuformende Planetenrohling kann eine Kontur aufweisen, die im Bereich des auszubildenden ersten Randzahns derart ausgebildet ist, dass Material des Planetenrohlings im freien Materialfluss umgeformt wird und zumindest teilweise eine Kontur des ersten Randzahns bildet. Das Walzwerkzeug wird in diesem Fall im Bereich des ersten Randzahns nicht voll ausgefüllt, sondern es verbleibt Raum für einen freien Materialfluss von Material des Planetenrohlings.

Insbesondere bei einem umformenden Verfahren zur Herstellung der Planeten können ein geeignetes Umformwerkzeug und zugrunde liegende Planetenrohlinge so eingerichtet und aufeinander abgestimmt werden, dass die ersten Randzähne innerhalb und mit Abstand zu der Zahnkontur der ersten Zähne ausgebildet werden. Ein erfindungsgemäßes Herstellverfahren und eine Vorrichtung zur Durchführung des Verfahrens sind weiter unten beschrieben.

Eine Vielzahl von Zähnen bedeutet, dass wenigstens zwei Zähne ausgebildet sind, zwischen denen eine Rille angeordnet ist. Die Zähne können mit ihren einander zugewandten Zahnflanken die Rille begrenzen. Eine Zahnkontur im Sinn der Erfindung hüllt den Zahn ein; sie beschreibt die Kontur, die ordnungsgemäß hergestellte erste Zähne aufweisen, innerhalb der zugelassenen Toleranzen.

In bekannter Weise weisen die Zahnflanken der ersten Zähne koaxial um die Planetenachse herum angeordnete erste Wälzkontaktbahnen für den Wälzeingriff mit einer Gewindespindel auf. Die beiden ineinandergreifenden Wälzpartner berühren einander im Wälzkontakt an der Wälzkontaktbahn, die sich ringförmig um die Planetenachse herum erstreckt.

In erfindungsgemäßer Ausgestaltung weisen die beiden ersten Randzähne des Mittelabschnitts gegenüber den anderen ersten Zähnen des Mittelabschnitts eine geringere Zahndicke auf. Diese geringere Zahndicke liegt auf einem Radius der Wälzkontaktbahn, dessen Mittelpunkt auf der Planetenachse liegt. Auf diese Weise ist sicher gestellt, dass die ersten Randzähne nicht oder nicht voll belastet werden. Unter Last können die im Planetenwälzgewindetrieb angeordneten erfindungsgemäßen Planeten unter elastischer Verformung der im Wälzeingriff stehenden Bauteile an ihren ersten Randzähnen zwar einer Belastung durch die Gewindespindel ausgesetzt sein; jedoch stellt die Kontur der erfindungsgemäßen ersten Randzähne sicher, dass die ersten Randzähne mit einer geringeren Last als die anderen ersten Zähne belastet werden.

Die Zahnspitzen der ersten Randzähne des Mittelabschnitts sind vorzugsweise radial innerhalb der Zahnspitzen der anderen ersten Zähnen des Mittelabschnitts angeordnet. Diese Maßnahme trägt zu einer reduzierten Belastung der Randzähne bei. Eine im Mittelabschnitt vom Rillengrund der Rillen bis zur Zahnspitze des ersten Randzahns ausgebildete Zahnhöhe beträgt vorzugsweise etwa 50% bis etwa 90% der Zahnhöhe der anderen ersten Zähne.

Das zweite Eingriffsprofil des Endabschnitts kann eine Vielzahl von ringförmig um die Planetenachse angeordneten zweiten Zähnen aufweisen, wobei zwischen aufeinander folgenden zweiten Zähnen jeweils eine ringförmig um die Planetenachse angeordnete zweite Rille ausgebildet ist. Die ringförmig und koaxial um die Planetenachse angeordneten Rillen und Zähne können parallel zu einer Ebene sein, die quer zu der Planetenachse angeordnet ist.

Der Endabschnitt kann an seinem dem Mittelabschnitt zugewandten Ende einen zweiten Randzahn aufweisen, der ebenso wie der erste Randzahn nicht vollständig ausgebildet ist. Eine Zahnspitze des zweiten Randzahns kann radial innerhalb der Zahnspitzen der anderen zweiten Zähne des Endabschnitts angeordnet sein. Eine unerwünscht hohe Belastung der zweiten Randzähne im Wälzeingriff mit der Spindelmutter kann mit diesen erfindungsgemäßen Planeten vermieden werden.

Einander benachbart angeordnete erste Zähne können mit ihren einander zugewandten Zahnflanken die erste Rille begrenzen, wobei einander benachbart angeordnete zweite Zähne mit ihren einander zugewandten Zahnflanken, die zweite Rille begrenzen.

Zwischen dem Mittelabschnitt und den beiden Endabschnitten kann ein Zwischenabschnitt ausgebildet sein, der sich in axialer Richtung von der Zahnspitze des ersten Randzahns bis zu der Zahnspitze eines benachbarten zweiten Randzahns des Endabschnitts erstrecken kann. Die zweiten Zähne des Endabschnitts sind - bezogen auf die Planetenachse - im Durchmesser kleiner als die ersten Zähne. Der Zwischenabschnitt kann sich in vorteilhafter Weise entlang der Planetenachse in Richtung auf den Endabschnitt verjüngen. Auf diese Weise ist sicher gestellt, dass in dem Bereich des Zwischenabschnitts nur ein Kontakt der Gewindespindel mit der dem Endabschnitt zugewandten Zahnflanke des Randzahns möglich ist, ein Kontakt im übrigen Zwischenabschnitt jedoch ausgeschlossen ist.

An dem freien Ende beider Endabschnitte kann ein koaxial zu der Planetenachse angeordneter Zapfen ausgebildet sein, dessen insbesondere zylindrische Mantelfläche radial innerhalb von Zahnspitzen der zweiten Zähne des Endabschnitts angeordnet sein kann. Dieser bei Planeten an sich bekannte Zapfen dient der Aufnahme der Planeten in einem Käfig. Die Zapfen greifen in Lageröffnungen des Käfigs ein und sind darin drehbar gelagert.

Wenn erfindungsgemäße Planeten in einem Umformprozess spanlos hergestellt werden, beispielsweise in einem Walzverfahren, können Zahnspitzen der Randzähne unvollkommen ausgebildet sein; im Kopfbereich derartig hergestellter Randzähne kann sich die Zahnspitze als zerklüftete Oberfläche darstellen, die sich aufgrund eines freien Materialflusses ausgebildet hat. Die voneinander abgewandten Zahnflanken des ersten und des zweiten Randzahns können einwandfrei unter Walzkontakt mit dem Walzwerkzeug ausgeformt sein und können eine Wälzkontaktbahn bilden.

Der erste Randzahn kann an seiner dem Endabschnitt zugewandten Seite mit einer nur teilweise ausgebildeten Zahnflanke ausgebildet sein, die im eingebauten Zustand im Planetenwälzgewindetrieb unter Belastung und elastischer Verformung von beteiligten Bauteilen in Wälzkontakt mit der Gewindespindel kommen kann, wobei allerdings aufgrund der erfindungsgemäß verkleinerten ersten Randzähne die Hauptlast von den anderen ersten Zähnen des Mittelabschnitts aufgenommen und der erste Randzahn nur stark abgeschwächt belastet wird.

Der zweite Randzahn des Endabschnitts kann an seiner dem Mittelabschnitt zugewandten Seite keine oder nur ansatzweise ausgebildete Zahnflanke aufweisen. Das nachstehend beschriebene erfindungsgemäße Verfahren zur Herstellung erfindungsgemäßer Planeten ermöglicht eine wirtschaftliche Herstellung von Planeten, die im Betrieb zuverlässig eine Verbindung zwischen der Spindelmutter und der Gewindespindel gewährleisten.

Zunächst wird ein Planetenrohling bereitgestellt, der entlang seiner Planetenachse einen dickeren zylindrischen Mittelabschnitt und zu beiden axialen Enden des Mittelabschnitts gelegene dünnere zylindrische Endabschnitte aufweist, wobei zwischen dem Mittelabschnitt und dem Endabschnitt ein sich von dem Mittelabschnitt in Richtung auf den Endabschnitt verjüngender Übergangsabschnitt ausgebildet ist. Dieser Übergangsabschnitt kann kegelförmig ausgeführt sein. In die Mantelfläche des Planetenrohlings werden das erste und das zweite Eingriffsprofil eingewalzt, wobei unter einer Umformkraft eine Mantelfläche des Übergangsabschnitts des Planetenrohlings im freien Materialfluss umgeformt wird zu einem Zwischenabschnitt, der etwa zwischen Zahnspitzen der beiden einander benachbart angeordneten ersten und zweiten Randzähne des Mittelabschnitts und der Endabschnitte gelegen ist.

Freier Materialfluss bedeutet, dass die Mantelfläche des Übergangsabschnitts nicht in Kontakt kommt mit einem Umformwerkzeug, und dass durch die zu beiden axialen Seiten des Übergangsabschnitts auf den Rohplaneten einwirkenden Umformkräfte die Umformung des Übergangsabschnittes zu dem Zwischenabschnitt erfolgt. Das Material des Rohplaneten wird lediglich in der Weise unter Ausbildung der ersten und der zweiten Randzähne verdrängt, dass der Zwischenabschnitt gebildet ist. Der Übergangsabschnitt ist entsprechend dimensioniert und angeordnet, wobei sichergestellt ist, dass der Zwischenabschnitt - mit Ausnahme der dem Endabschnitt zugewandten Zahnflanke des ersten Randzahns - nicht in Kontakt mit der Gewindespindel und der Spindelmutter des Planetenwälzgewindetriebes kommt.

Die an dem Planetenrohling angreifenden Umformkräfte bewirken, dass der Übergangsabschnitt des Planetenrohlings zu dem Zwischenabschnitt des Planeten umgeformt wird, wobei sich der Zwischenabschnitt in radialer Richtung zwischen den Zahnspitzen der ersten und der zweiten Randzähne erstreckt.

Der Übergangsabschnitt des Planetenrohlings kann eine kegelförmige Mantelfläche aufweisen, deren umlaufende Randabschnitte an die zylindrischen Endabschnitte und an den zylindrischen Mittelabschnitt einstückig anschließen. Diese kegelförmige Mantelfläche ist so angeordnet, dass ihre Umformung im freien Materialfluss die gewünschte Kontur des Zwischenabschnitts erzeugt.

Der Planetenrohling kann in wirtschaftlich günstiger Weise mit seinem zylindrischen Mittelabschnitt, seinen zylindrischen Endabschnitten und seinen zwischen dem Mittelabschnitt und den Endabschnitten angeordneten kegelförmigen Übergangsabschnitten durch Fließpressen hergestellt werden.

Der fließgepresste Planetenrohling kann in einem anschließendem Schleifverfahren geschliffen werden, wobei eine gewünschte Formgenauigkeit mit engen Toleranzen erreicht wird. Hier bietet sich das Centerless-Schleifen an.

Während des Umformens des Planetenrohlings können in beschriebener Weise die beiden Eingriffsprofile eingeformt werden und zusätzlich die an den freien Enden der Endabschnitte einstückig anschließenden Zapfen angeformt werden. Der Zapfendurchmesser kann je nach Anwendungsfall ausgelegt werden und kleiner als der Durchmesser des Rillengrundes der zweiten Rillen sein.

Der in diese Weise hergestellte erfindungsgemäße Planet kann in einem Wärmebehandlungsverfahren gehärtet werden.

Für das Umformen eignet sich besonders das Walzverfahren, mit dem rotationssymmetrische Körper in wirtschaftlich günstiger Weise hergestellt werden können. Das Walzen mit Flachbackenwerkzeugen und mit Rollierwerkzeugen ist für die Herstellung erfindungsgemäßer Planeten geeignet. Bei dem Walzvorgang wirken Walzenkräfte auf den Planetenrohling ein, die als Umformkraft den Planetenrohling in gewünschter Weise umformen. Unter einer Relativdrehung der Rollierwalzen oder einer Relativverschiebung von mit Walzprofilen versehenen Flachbacken rotiert und/oder gleitet der zwischen den Werkzeugteilen eingespannte Planetenrohling um seine Längsachse, wobei der Planetenrohling an den Walzprofilen des Werkzeugs abwälzt und/oder abgleitet und wobei unter der Wirkung der Umformkräfte die gewünschte Kontur in den Planetenrohling eingewalzt wird.

Für die Durchführung des erfindungsgemäßen Verfahrens eignet sich insbesondere ein Flachbackenwerkzeug, aufweisend zwei Flachbacken, die an ihren einander zugewandten Seiten jeweils mit einem Walzprofil zum Einwalzen der beiden Eingriffsprofile und der Zapfen versehen sind, wobei die beiden Flachbacken entlang einer Achse relativ zueinander verschoben werden. Das Walzprofil kann ein mittleres Walzprofil zum Einwalzen des ersten Eingriffsprofils aufweisen, sowie ein äußeres Walzprofil zum Einwalzen des zweiten Eingriffsprofils und der Zapfen.

Im Übergang zwischen dem mittleren Walzprofil und dem äußeren Walzprofil kann ein walzfreier Übergangsbereich ohne Kontakt zum Planetenrohling ausgebildet sein. In diesem walzfreien Übergangsbereich erfolgt die Umformung des Übergangsabschnitts des Planetenrohlings im freien Materialfluss, also ohne dass die Mantelfläche des Übergangsabschnittes in unmittelbarem Kontakt mit dem Walzwerkzeug ist. Während des Walzvorganges wird der erste Randzahn nicht voll ausgebildet und ist in seinem Kopfbereich und seinem dem Endabschnitt zugewandten Zahnflankenbereich einem freien Materialfluss unterworfen.

Der beschriebene Rohplanet ermöglicht in wirtschaftlich günstiger Weise das Einwalzen des ersten und des zweiten Eingriffprofils sowie der Zapfen in einem gemeinsamen Walzvorgang.

Erfindungsgemäße Planeten eignen sich aufgrund ihrer wirtschaftlichen Herstellung besonders für Großserien, beispielsweise für den Einsatz von Planetenwälzgewindetrieben im Automobilbau.

Nachstehend wird die Erfindung anhand eines in insgesamt sieben Figuren abgebildeten Ausführungsbeispieles näher erläutert. Es zeigen:
- Figur 1: einen erfindungsgemäßen Planeten,
- Figur 2: eine Ausschnittsvergrößerung aus Figur 1,
- Figur 3: ausschnittsweise einen Wälzeingriff zwischen einer Spindelmutter und dem erfindungsgemäßen Planeten,
- Figur 4a: ein erfindungsgemäßes Flachbackenwerkzeug mit einem Planetenrohling vor einem Walzvorgang,
- Figur 4b: das erfindungsgemäße Flachbackenwerkzeug aus Figur 4a mit einem gewalzten Planeten,
- Figur 5: eine Ausschnittsvergrößerung aus Figur 4b,
- Figur 6: einen erfindungsgemäßen Planetenrohling und einen für die Auslegung vorgesehenen Modellplaneten, jeweils in einem Halbschnitt, und
- Figur 7: einen bekannten Planetenwälzgewindetrieb.

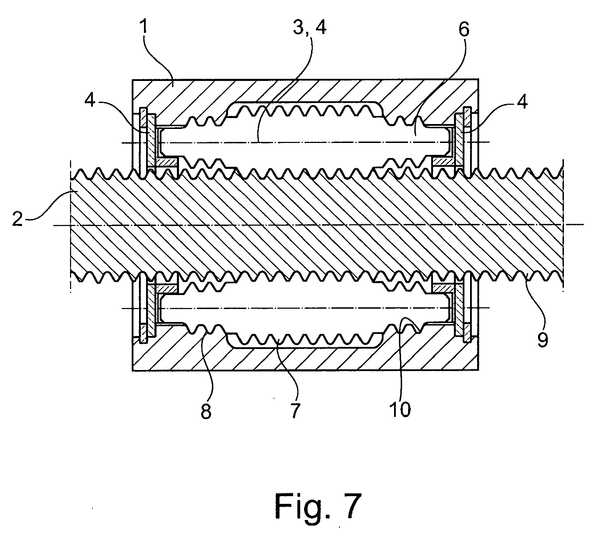

Figur 7 zeigt einen herkömmlichen Planetenwälzgewindetrieb, in dem erfindungsgemäße Planeten verwendet werden können. Eine Spindelmutter 1 ist auf einer Gewindespindel 2 angeordnet. Zwischen der Spindelmutter 1 und der Gewindespindel 2 sind über den Umfang verteilte Planeten 3 angeordnet. Zu beiden axialen Seiten der Planeten 3 sind Abstandscheiben 4 angeordnet, die die Planeten 3 in den Umfangsrichtungen auf Abstand zueinander halten. Im Betrieb wälzen die Planeten 3 an der Spindelmutter 1 und an der Gewindespindel 2 ab und rotieren um ihre Planetenachse. Die Abstandscheiben 4 rotieren gemeinsam mit den Planeten 3gegenüber der Spindelmutter 1 sowie der Gewindespindel 2.

Jeder Planet 3 weist einen entlang seiner Planetenachse im Durchmesser größeren Mittelabschnitt 5 und axial zu beiden Seiten des Mittelabschnitts 5 je einen im Durchmesser kleineren Endabschnitt 6 auf, wobei an der Mantelfläche des Planeten 3 im Mittelabschnitt 5 ein erstes Eingriffprofil 7 und in den Endabschnitten 6 jeweils ein zweites Eingriffsprofil 8 ausgebildet ist. Die Planeten 3 sind mit ihrem ersten Eingriffsprofil 7 in Wälzeingriff mit einem schraubenförmig um die Spindelachse gewundenen Gewinde 9 der Gewindespindel 2. Die Planeten 3 sind mit ihrem zweiten Eingriffseinprofil 8 in Wälzeingriff mit einem mutterseitigen Eingriffsprofil 10 der Spindelmutter 1.

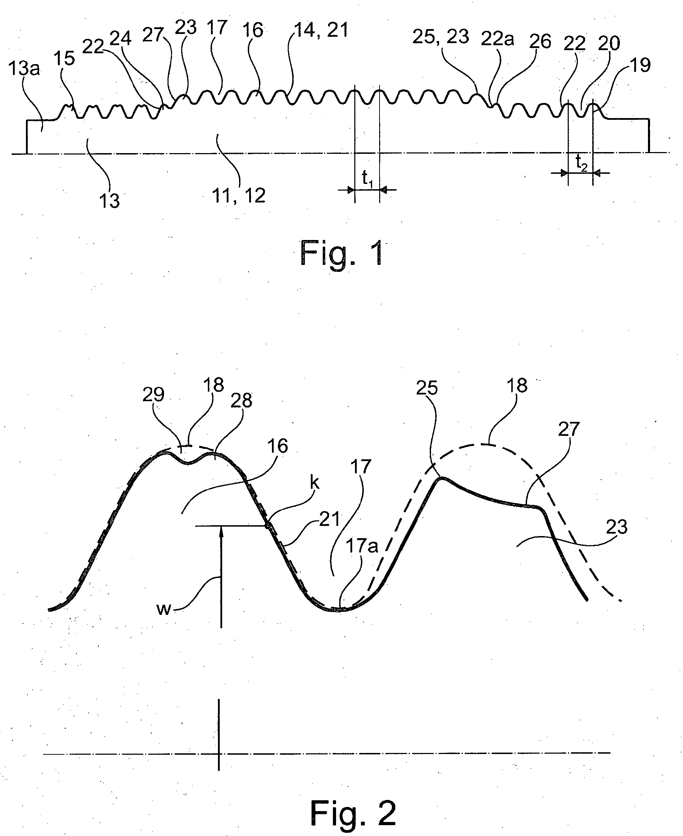

Die Figuren 1, 2 und 3 zeigen einen erfindungsgemäßen Planeten 11 im Längshalbschnitt, in einer Ausschnittsvergrößerung und in einer Ausschnittsvergrößerung im Wälzkontakt mit der Gewindespindel 2. Jeder Planet 11 weist einen entlang seiner Planetenachse im Durchmesser größeren Mittelabschnitt 12 und axial zu beiden Seiten des Mittelabschnitts 12 je einen im Durchmesser kleineren Endabschnitt 13 auf, wobei an der Mantelfläche des Planeten 11 im Mittelabschnitt 12 ein erstes Eingriffprofil 14 und in den Endabschnitten 13 jeweils ein zweites Eingriffsprofil 15 ausgebildet ist. Das erste Eingriffsprofil 14 ist für einen Wälzeingriff mit einem schraubenförmig um die Spindelachse gewundenen Gewinde einer Gewindespindel vorgesehen. Das zweite Eingriffseinprofil 15 ist für einen Wälzeingriff mit einem mutterseitigen Eingriffsprofil einer Spindelmutter vorgesehen.

Das erste Eingriffsprofil 14 der Planeten 11 weist eine Vielzahl von ringförmig um die Planetenachse angeordneten ersten Zähnen 16 auf, wobei zwischen aufeinander folgenden ersten Zähnen 16 jeweils eine ringförmig um die Planetenachse angeordnete erste Rille 17 ausgebildet ist, wobei den ersten Zähnen 16 des Mittelabschnitts 12 jeweils eine Zahnkontur 18 zugeordnet ist. Diese ersten Rillen 17 werden auch als Vorschubrillen bezeichnet, weil der Wälzeingriff mit der Gewindespindel den relativen Vorschub zwischen Gewindespindel und Spindelmutter ermöglicht.

Das zweite Eingriffsprofil 15 weist eine Vielzahl von ringförmig um die Planetenachse angeordneten zweiten Zähnen 19 auf, wobei zwischen aufeinander folgenden zweiten Zähnen 19 jeweils eine ringförmig um die Planetenachse angeordnete zweite Rille 20 ausgebildet ist. Diese zweiten Rillen 20 werden auch als Führungsrillen bezeichnet, weil die Planeten 11 mit diesen zweiten Rillen 20 für einen Wälzeingriff mit dem mutterseitigen Eingriffsprofil vorgesehen sind und auf einer Kreisbahn um die Spindelachse herum in der Spindelmutter geführt werden.

Einander benachbart angeordnete erste Zähne 16 begrenzen mit ihren einander zugewandten Zahnflanken 21 die erste Rille 17 . Einander benachbart angeordnete zweite Zähne 19 begrenzen mit ihren einander zugewandten Zahnflanken 22 die zweite Rille 20 begrenzen.

Die hier beschriebenen ringförmig um die Planetenachse angeordneten Rillen und Zähne sind quer zu der Planetenachse angeordnet.

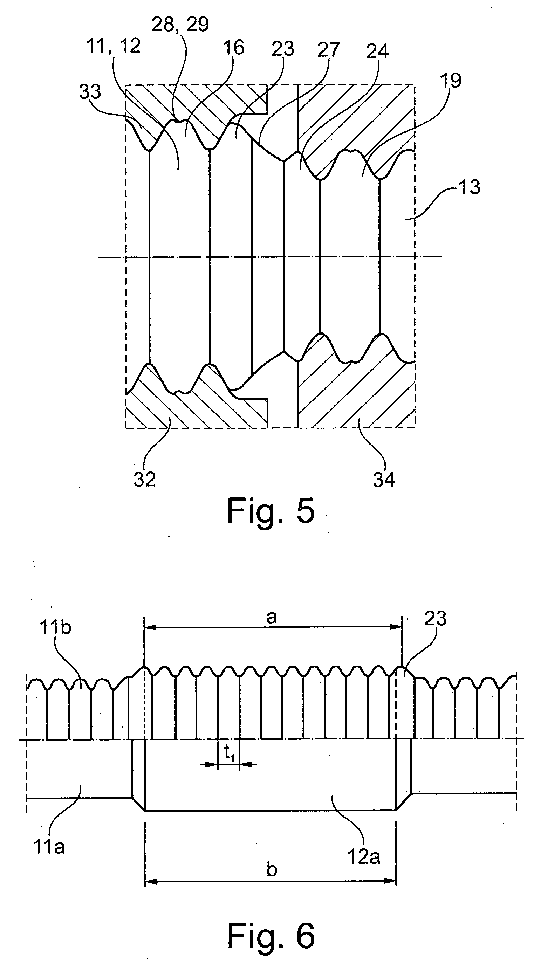

An beiden axialen Enden der Planeten 11 ist ein koaxial zu der Planetenachse angeordneter zylindrischer Zapfen 13a für den Eingriff in Lageröffnungen einer Abstandscheibe vorgesehen, wie sie oben zu der Figur 6 beschrieben wurde.

Die beiden an den Enden des Mittelabschnitts 12 gelegenen ersten Randzähne 23 sind gegenüber den dazwischen angeordneten anderen ersten Zähnen 16 in erfindungsgemäßer Weise nur unvollkommen ausgebildet.

Die beiden Endabschnitte 13 weisen an ihren dem Mittelabschnitt 12 zugewandten Enden jeweils einen zweiten Randzahn 24 auf, der gegenüber den benachbarten zweiten Zähnen 19 unvollkommen ausgebildet ist. Die dem zweiten Zahn 19 zugewandte Zahnflanke 22 des zweiten Randzahns 24 ist ähnlich oder gleich ausgebildet wie die Zahnflanken 22 der benachbarten zweiten Zähne 19. Die einem Zwischenabschnitt 27 zugeordnete andere Zahnflanke 22a des zweiten Randzahns 24 ist jedoch nur unvollkommen ausgebildet und für einen Wälzeingriff nicht vorgesehen.

Zwischen Zahnspitzen 25, 26 des ersten Randzahns 23 und des zweiten Randzahns 24 ist der Zwischenabschnitt 27 ausgebildet. Die Zahnspitze 25 des ersten Randzahns 23 stellt sich aufgrund ihrer Ausbildung im freien Materialfluss nur schwach ausgebildet dar. Die zweiten Zähne 19 sind bezogen auf die Planetenachse im Durchmesser kleiner als die ersten Zähne 16. Der Zwischenabschnitt 27 verjüngt sich entlang der Planetenachse in Richtung auf den Endabschnitt 13. Der Zwischenabschnitt 27 ist derart dimensioniert, dass ein Kontakt der Gewindespindel nur mit der dem Endabschnitt 13 zugewandten Zahnflanke des ersten Randzahns 23 möglich ist, ein Kontakt im übrigen Zwischenabschnitt 27 jedoch ausgeschlossen ist. Der Zwischenabschnitt 27 ist nicht für den Wälzeingriff mit der Spindelmutter vorgesehen.

Die ersten Zähne 16 haben einen parallelen Abstand mit einer gleichen Teilung t1. Die zweiten Zähne 19 haben einen parallelen Abstand mit einer gleichen Teilung t2.

Figur 2 zeigt deutlich den ersten Randzahn 23 und benachbart einen der ersten Zähne 16, dessen Zahnspitze 28 eine sogenannte Schließfalte 29 aufweist, die umlaufend um die Planetenachse ausgebildet ist. Die Schließfalte 29 ist Folge eines weiter unten beschriebenen erfindungsgemäßen Herstellungsverfahrens des Planeten. Deutlich ist die dem ersten Zahn 16 zugeordnete Zahnkontur 18 eingezeichnet, wobei der erste Randzahn 23 in erfindungsgemäßer Weise innerhalb und mit Abstand zu der Zahnkontur 18 ausgebildet ist. Der erste Randzahn 23 ist in diesem Ausführungsbeispiel von seiner Zahnspitze bis zu dem Rillengrund der Rille 17 innerhalb und mit Abstand zu der Zahnkontur 18 ausgebildet.

Die Zahnspitze 25 des ersten Randzahns 23 ist radial innerhalb der Zahnspitze 28 des benachbarten ersten Zahns 16 angeordnet. Die Zahnhöhe des ersten Randzahns 23 beträgt etwa 50 - 90 Prozent der Zahnhöhe des benachbarten ersten Zahns 16. An der dem ersten Zahn 16 zugewandten Zahnflanke des ersten Randzahns 23 beträgt die Zahnhöhe 70 bis 90 Prozent der Zahnhöhe des ersten Zahns 16. An der dem zweiten Randzahn 24 zugewandten Zahnflanke des ersten Randzahns 23 beträgt die Zahnhöhe bis 50 bis 70 Prozent der Zahnhöhe des ersten Zahns 16. Die Zahnhöhe erstreckt sich vom Rillengrund 20a der ersten Rille 20.

Bei gängigen Planetengrößen bis zu etwa 10 mm im Durchmesser ist der erste Randzahn des Mittelabschnitts ausgehend von einer Zahnmitte etwa 2 mal 0,005 bis 2 mal 0,02 mm schmaler als die benachbarten ersten Zähne.

Die Oberfläche des ersten Randzahns 23 ist im Bereich des Zwischenabschnitts 27 im freien Materialfluss ausgebildet; das bedeutet, aufgrund von plastischer Umformung von Material des Planeten hat sich diese Oberfläche ausgebildet, ohne dass der Zwischenabschnitt in Kontakt mit einem Umformwerkzeug gekommen ist.

Mit einem Radius w um die Planetenachse herum ist an den Planeten 11 im Mittelabschnitt 12 eine Wälzkontaktbahn für den Wälzkontakt mit einer Spindelmutter ausgebildet. In Höhe der Wälzkontaktbahn ist ein deutlicher axialer Abstand des ersten Randzahns 23 zu der Zahnkontur 18 ausgebildet. Ein Wälzkontakt mit der Gewindespindel kann unter elastischer Verformung der die Last übertragenden Bauteile möglich sein. Die in diesem Wälzkontakt auftretenden Kräfte sind jedoch deutlich abgeschwächt. Die Randzähne sind demzufolge nicht Ausgangspunkt für eine Schädigung.

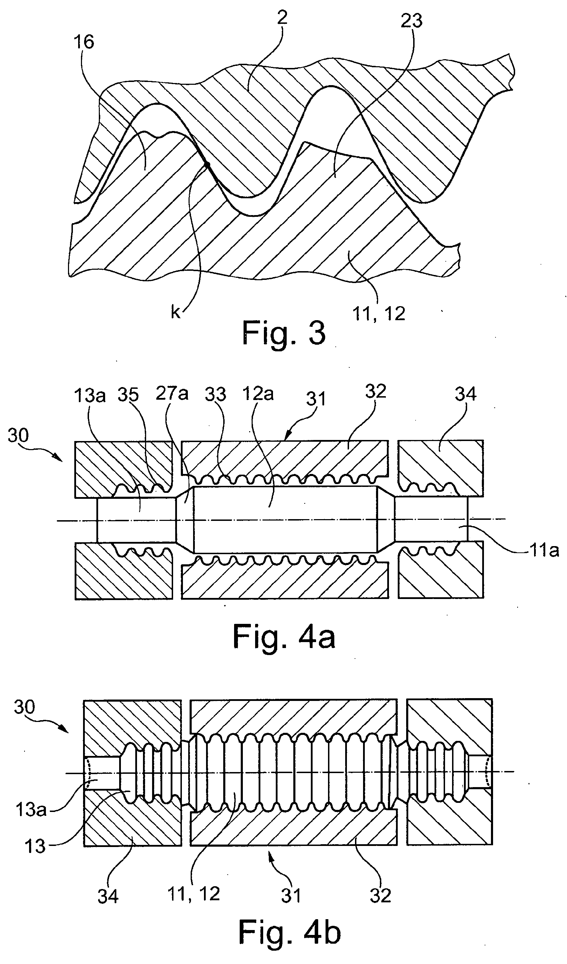

Figur 3 zeigt eine Ausschnittsvergrößerung des Planeten 11 im Mittelabschnitt 12 im Wälzeingriff mit der Gewindespindel 2. Im Wälzkontakt K an der Wälzkontaktbahn berühren die Gewindespindel 2 und der Planet 11 einander. Deutlich ist zu erkennen, dass kein Wälzkontakt besteht zwischen dem ersten Randzahn 23 und der Gewindespindel 2. Erst unter weiterer axialer Belastung des Planetenwälzgewindetriebes kann aufgrund elastischer Verformung ein derartiger Wälzkontakt auftreten; allerdings ist die in diesem Wälzkontakt auftretende Kraft so gering, dass ein Ausbrechen von Material aus dem ersten Randzahn 23 ausgeschlossen ist. Dieser Vorteil ist gegeben durch den erfindungsgemäß unterfüllten ersten Randzahn 23.

Figur 3 zeigt ferner den Eingriff der Gewindespindel 2 in die Rillen 17 des Mittelabschnitts 12 des erfindungsgemäßen Planeten 11. Das Gewinde der Gewindespindel 2 reicht nicht bis zum Rillengrund der Rille 17. Innerhalb der Überlappung des Gewindes der Gewindespindel 2 und der ersten Zähne 16 weisen die ersten Zähne 16 einen Nutzabschnitt auf. In diesem Ausführungsbeispiel sind wie ersten Randzähne 23 im Nutzabschnitt der ersten Zähne 16 innerhalb und mit Abstand zu der Zahnkontur 18 (Figur 2) angeordnet und darüber hinaus bis zu dem Zahnfuß, also bis zum Rillengrund der Rille 17 innerhalb der Zahnkontur 18 angeordnet.

Die Figuren 4a und 4b zeigen ein Flachbackenwerkzeug zur Herstellung erfindungsgemäßer Planeten, wobei nachstehend das Verfahren zur Herstellung der Planeten und das Flachbackenwerkzeug zur Durchführung des Verfahrens beschrieben werden.

Das Flachbackenwerkzeug 30 weist zwei einander gegenüber liegend angeordnete Flachbacken 31 auf, die im Ausführungsbeispiel jeweils dreiteilig ausgeführt sind. Die Flachbacken 31 sind an ihren einander zugewandten Seiten jeweils mit einem Walzprofil versehen. Das mittlere Flachbackenteil 32 ist mit einem mittleren Walzprofil 33 zum Einwalzen des ersten Eingriffsprofils in die Planeten versehen. Die beiden äußeren Flachbackenteile 34 sind jeweils mit einem äußeren Walzprofil 35 zum Einwalzen des zweiten Eingriffsprofils und der Zapfen in die Planeten versehen.

Die Flachbacken 30 erstrecken sich entlang einer Werkzeugachse aus der Bildebene heraus, wobei die beiden Flachbacken 30 während des Walzvorganges entlang dieser Werkzeugachse relativ zueinander verschoben werden.

Zwischen den beiden Flachbacken 30 ist ein Planetenrohling 11a angeordnet, der in dem Walzvorgang zu dem erfindungsgemäßen Planeten 11 (Fig. 4b) gewalzt wird.

Der Planetenrohling 11 a ist in wirtschaftlicher günstiger Weise im Fließpressverfahren hergestellt. Das Fließpressen wird begünstigt durch die einfache Form der Planetenrohlings 11a, der einen zylindrischen Mittelabschnitt 12a und zwei axial benachbarte, nicht abgestufte zylindrische Endabschnitte 13a aufweist. Diese nicht abgestuften Endabschnitte 13a bilden nach dem Walzvorgang die Endabschnitte und die abgestuften Zapfen der erfindungsgemäßen Planeten. Zwischen den Endabschnitten 13a und dem Mittelabschnitt 12a ist jeweils ein kegeliger Übergangsabschnitt 27a ausgebildet, dessen axiale Ränder an die zylindrischen Enden des Mittelabschnitts 12a und der Endabschnitte 13a einstückig anschließen. Im Ausführungsbeispiel schließt die Mantelfläche des kegeligen Übergangsabschnitts 27a mit der Planetenachse einen Winkel von etwa 45 Grad ein. Nach dem Fließpressen werden die Planetenrohlinge 11a centerless geschliffen und erhalten eine Formgenauigkeit, die für den anschließenden Wälzvorgang geeignet ist.

Zum Einwalzen werden die beiden Flachbacken 32 aufeinander gefahren, wobei das Walzprofil der Flachbacken 32 in die Mantelfläche des Planetenrohlings hineindrückt und den Planetenrohling plastisch umformt. Unter der Werkzeugbewegung wälzen und gleiten die Planetenrohlinge 11a an den Flachbacken 32 ab, wobei nach mehreren Umdrehungen des Planetenrohlings 11a das Werkzeugende erreicht ist und der Planet 11 seine Endkontur erhalten hat.

Der Figur 4a kann entnommen werden, dass der Übergangsabschnitt 27a des Rohplaneten in einem walzfreien Übergangsbereich des Flachbackenwerkzeugs 30 liegt, in dem während des Walzvorgangs ein Kontakt des Übergangsabschnitt 27a mit dem Flachbackenwerkzeug ausgeschlossen ist.

Figur 4b zeigt den fertig gewalzten Planeten 11, wie er weiter oben ausführlich beschrieben wurde. Deutlich ist auch eine linsenförmig unterfüllte Stirn des Planeten 11 zu erkennen, die strichpunktiert dargestellt ist. Diese linsenförmige Unterfüllung ist Ergebnis des Walzvorganges im Flachbackenwerkzeug 30, wenn der Planetenrohling eine ebene Stirnfläche aufweist. Die linsenförmige Unterfüllung der Stirn kann jedoch unterdrückt werden mit einer entsprechend vorbereiteten Stirnfläche des Planetenrohlings.

Während des Einwalzens wird Material des Rohplaneten 11 a umgeformt und fließt in das Walzprofil des Werkzeugs. Die Kontur des Walzprofils zwingt den Materialfluss in die vorgesehene Kontur des Planeten hinein, wobei aufgrund der erfindungsgemäßen Ausbildung des Rohplaneten 11 a der erste Randzahn 23 lediglich an seiner den anderen ersten Zähnen 16 zugewandten Zahnflanke durch das Walzprofil des Flachbackenwerkzeugs geformt wird. Ansonsten bildet sich der Randzahn 23 im freien Materialfluss und wird so klein ausgebildet, dass im Betrieb eines Planetenwälzgewindetriebes der erste Randzahn 23 nicht oder lediglich abgeschwächt belastet wird. Unter den zur Erzeugung der ersten und der zweiten Randzähne 23, 24 wirksamen Umformkräften wird Werkstoff des Rohplaneten 11 a im Bereich des Übergangsabschnittes 27a verdrängt.

Figur 5 zeigt eine Ausschnittsvergrößerung aus Figur 4b. Hier ist deutlich zu erkennen, dass der Übergangsabschnitt des Planetenrohlings zu dem Zwischenabschnitt 27 des Planeten 11 umgeformt wurde, ohne Kontakt zum Walzwerkzeug. Diese Umformung erfolgt demzufolge im freien Materialfluss. Deutlich ist zu erkennen, dass sich der kegelige Zwischenabschnitt 27 in Richtung auf den Endabschnitt 13 verjüngt. Das Flachbackenwerkzeug 30 wird im Bereich des Zwischenabschnitts 27 nicht ausgefüllt, es ist Raum geschaffen für den freien Materialfluss.

Figur 5 zeigt an dem abgebildeten ersten Zahn 16 die Schließfalte 29 an der Zahnspitze 28. Durch den Walzeingriff des mittleren Walzprofils 33 wird zwischen benachbarten Zähnen des Walzprofils Material des Rohplaneten 11a nach radial außen verdrängt unter Ausbildung des ersten Zahns 16. Das Material fließt in Richtung Zahnspitze 28 von beiden Zahnflanken des Walzprofils kommend und mündet in der Zahnspitze unter Ausbildung der Schließfalte 29.

Figur 6 zeigt im Halbschnitt einen Modellplaneten 11b (oben) und den Planetenrohling 11a (unten) ohne die eingeformten Zapfen. Der Modellplanet 11b unterscheidet sich von dem erfindungsgemäßen Planeten lediglich dadurch, dass die Randzähne des Mittelabschnitts voll ausgefüllt, also nicht unterfüllt sind. Mit diesem Modellplaneten kann der Mittenabstand von dem einen ersten Randzahn zu dem anderen ersten Randzahn genau angegeben werden. Dieser Mittenabstand a steht näherungsweise in einer weiter unter angegebenen Beziehung zu der axialen Erstreckung des zylindrischen Mittelabschnitts 12a des Rohplaneten 11a.

Der Mittenabstand a ist gleich oder entspricht etwa der Summe aus der axialen Erstreckung b des zylindrischen Mittelabschnitts 12a des Planetenrohlings 11a bis zum Beginn der 45 Grad Fase, zuzüglich ½ * t1 (Hälfte der Teilung t1). Mit dieser Auslegung kann ein erfindungsgemäßer Planet 11 mit einem verkürzten Mittelabschnitt und erfindungsgemäß unterfülltem Randzahn hergestellt werden.

Erfindungsgemäße Planeten können mit dem beschriebenen Flachbackenwerkzeug in der beschriebenen Weise demzufolge auf wirtschaftliche Weise hergestellt werden, wobei der Rohplanet in einem einzigen Walzvorgang zu dem Planeten umgeformt wird. Der Planet kann anschließend in Wärmebehandlungsverfahren gehärtet werden.

### Bezugszeichenliste

- 1: Spindelmutter
- 1: Gewindespindel
- 2: Planet
- 3: Abstandsscheibe
- 4: Mittelabschnitt
- 5: Endabschnitt
- 6: erstes Eingriffsprofil
- 7: zweites Eingriffsprofil
- 8: Gewinde
- 9: mutterseitiges Eingriffsprofil
- 10: Planet
- 11a: Planetenrohling
- 11b: Modellplanet
- 11: Mittelabschnitt
- 12a: zylindrischer Mittelabschnitt
- 12: Endabschnitt
- 13a: Endabschnitt
- 13: erstes Eingriffsprofil
- 14: zweites Eingriffsprofil
- 15: erster Zahn
- 16: erste Rille
- 17: Zahnkontur
- 18: zweiter Zahn
- 19: zweite Rille
- 20a: Rillengrund
- 20: Zahnflanke
- 21: Zahnflanke
- 22: erster Randzahn
- 23: zweiter Randzahn
- 24: Zahnspitze
- 25: Zahnspitze
- 26: Zwischenabschnitt
- 27a: kegeliger Übergangsabschnitt
- 27: Zahnspitze
- 28: Schließfalte
- 29: Flachbackenwerkzeug
- 30: Flachbacke
- 31: mittleres Flachbackenteil
- 32: mittleres Walzprofil
- 33: äußeres Flachbackenteil
- 34: äußeres Walzprofil

## Patentansprüche

1. Planet (11) für einen Planetenwälzgewindetrieb, entlang dessen Planetenachse ein im Durchmesser größerer Mittelabschnitt (12) und axial zu beiden Seiten des Mittelabschnitts (12) je ein im Durchmesser kleinerer Endabschnitt (13) ausgebildet sind, wobei an der Mantelfläche des Planeten (11) im Mittelabschnitt (12) ein erstes Eingriffprofil (14) und in den Endabschnitten (13) jeweils ein zweites Eingriffsprofil (15) ausgebildet ist, wobei das erste Eingriffsprofil (14) eine Vielzahl von ringförmig um die Planetenachse angeordneten ersten Zähnen (16) aufweist, wobei zwischen aufeinander folgenden ersten Zähnen (16) jeweils eine ringförmig um die Planetenachse angeordnete erste Rille (17) ausgebildet ist, **dadurch gekennzeichnet, dass** die beiden an den Enden des Mittelabschnitts (12) gelegenen ersten Randzähne (23) des Mittelabschnittes (12) innerhalb und mit Abstand zu einer den ersten Zähne (16) des Mittelabschnitts (12) zugeordneten Zahnkontur (18) ausgebildet sind.

2. Planet (11) nach Anspruch 1, bei dem Zahnflanken (21) der ersten Zähne (16) koaxial um die Planetenachse herum angeordnete erste Wälzkontaktbahnen für den Eingriff einer Gewindespindel aufweisen, wobei die beiden ersten Randzähne (23) des Mittelabschnitts (12) gegenüber den anderen ersten Zähnen (16) des Mittelabschnitts (12) eine geringere Zahndicke auf einem Radius (w) der Wälzkontaktbahn um die Planetenachse aufweisen.

3. Planet (11) nach Anspruch 1, bei dem Zahnspitzen (25) der ersten Randzähne (23) des Mittelabschnitts (12) radial innerhalb der Zahnspitzen (28) der anderen ersten Zähne (16) des Mittelabschnitts (12) angeordnet sind.

4. Planet (11) nach Anspruch 1, bei dem eine im Mittelabschnitt (12) vom Rillengrund (17a) der Rillen (17) bis zur Zahnspitze (25) des ersten Randzahns (23) ausgebildete Zahnhöhe etwa 50% bis etwa 90% der Zahnhöhe der anderen ersten Zähne (16) beträgt.

5. Planet (11) nach Anspruch 1, bei dem das zweite Eingriffsprofil (15) des Endabschnitts (13) eine Vielzahl von ringförmig um die Planetenachse angeordneten zweiten Zähnen (19) aufweist, wobei zwischen aufeinander folgenden zweiten Zähnen (19) jeweils eine ringförmig um die Planetenachse angeordnete zweite Rille (20) ausgebildet ist, wobei zwischen den Zahnspitzen (25) des ersten Randzahns (23) und eines dem Mittelabschnitt (12) zunächst gelegenen zweiten Randzahns (24) des Endabschnitts (13) ein Zwischenabschnitt (27) ausgebildet ist, der sich entlang der Planetenachse in Richtung auf den Endabschnitt (13) verjüngt.

6. Planet nach Anspruch 1, bei dem zwischen dem Mittelabschnitt (12) und den beiden Endabschnitten (13) ein Zwischenabschnitt (27) ausgebildet ist, der sich in axialer Richtung zwischen der Zahnspitze (25) des ersten Randzahns (23) und der Zahnspitze (26) des benachbarten zweiten Randzahns (24) erstreckt.

7. Verfahren zum Herstellen eines Planeten nach Anspruch 1, nach den folgenden Schritten:
Bereitstellen eines Planetenrohlings (11a), der entlang seiner Planetenachse einen dickeren Mittelabschnitt (12a) und zu beiden axialen Enden des Mittelabschnitts (12a) gelegene dünnere Endabschnitte (13a) aufweist, wobei zwischen dem Mittelabschnitt (12a) und dem Endabschnitt (13a) ein sich von dem Mittelabschnitt (12a) in Richtung auf den Endabschnitt (13a) verjüngender Übergangsabschnitt (27a) ausgebildet ist;
Einwalzen des ersten und des zweiten Eingriffsprofils (14, 15) in die Mantelfläche des Mittelabschnitts (12a) und der Endabschnitte (13a), wobei unter einer Umformkraft eine Mantelfläche des Übergangsabschnitts (27a) des Planetenrohlings (11a) im freien Materialfluss zu einem zwischen Zahnspitzen (25, 26) der beiden einander benachbart angeordneten ersten und zweiten Randzähne (23, 24) gelegenen Zwischenabschnitt (27) des Planeten (11) umgeformt wird.

8. Verfahren nach Anspruch 7, bei dem sich der Zwischenabschnitt (27) in radialer Richtung zwischen den Zahnspitzen (25, 26) der ersten und der zweiten Randzähne (23, 24) erstreckt.

9. Verfahren nach Anspruch 7, bei dem der Planetenrohling (11a) mit dem zylindrischen Mittelabschnitt (12a), den zylindrischen Endabschnitten (13a) sowie den zwischen dem Mittelabschnitt (12a) und den Endabschnitten (13a) angeordneten Übergangsabschnitten (27a) durch Fließpressen hergestellt ist.

10. Verfahren nach Anspruch 7, bei dem der fließgepresste Planetenrohling (11a) in einem anschließendem Schleifverfahren geschliffen wird.

11. Verfahren nach Anspruch 9, bei dem an dem Planetenrohling (11a) die beiden Eingriffsprofile (14, 15) sowie die an den freien Enden der Endabschnitte (13a) einstückig anschließenden Zapfen (13a) eingewalzt werden.

12. Verfahren nach Anspruch 11, bei dem der Planet (11) nach dem Einwalzen der Eingriffsprofile (14, 15) und der Zapfen (13a) in einem Wärmebehandlungsverfahren gehärtet wird.

13. Vorrichtung zur Durchführung des Verfahrens nach Anspruch 8, mit einem Flachbackenwerkzeug (30), aufweisend zwei Flachbacken (31), die an ihren einander zugewandten Seiten jeweils mit einem Walzprofil (33, 35) zum Einwalzen der beiden Eingriffsprofile (14, 15) und der Zapfen (13a) versehen sind, wobei die beiden Flachbacken (31) relativ zueinander verschiebbar sind, wobei das Walzprofil ein mittleres Walzprofil (33) zum Einwalzen des ersten Eingriffsprofils (14), sowie ein äußeres Walzprofil (35) zum Einwalzen der zweiten Eingriffsprofile (15) und der Zapfen (13a) aufweist und wobei im Übergang zwischen dem mittleren Walzprofil (33) und dem äußeren Walzprofil (35) ein walzfreier Übergangsbereich ohne Kontakt zum Planetenrohling (11a) ausgebildet ist.

## Claims

1. Planet (11) for a planetary roller screw drive, along the planet axis of which a middle section (12) of greater diameter and, axially on both sides of the middle section (12), in each case one end section (13) of smaller diameter are configured, a first engagement profile (14) being configured on the circumferential face of the planet (11) in the middle section (12) and a second engagement profile (15) being configured in each case in the end sections (13), the first engagement profile (14) having a multiplicity of first teeth (16) which are arranged in an annular manner around the planet axis, in each case one first groove (17) which is arranged in an annular manner about the planet axis being configured between first teeth (16) which follow one another, **characterized in that** the two first edge teeth (23) of the middle section (12) which lie at the ends of the middle section (12) are configured within and at a spacing from a toothed contour (18) which is assigned to the first teeth (16) of the middle section (12).

2. Planet (11) according to Claim 1, in which tooth flanks (21) of the first teeth (16) have first rolling contact tracks which are arranged coaxially around the planet axis for the engagement of a threaded spindle, the two first edge teeth (23) of the middle section (12) having a smaller tooth thickness on a radius (w) of the rolling contact track around the planet axis than the other first teeth (16) of the middle section (12).

3. Planet (11) according to Claim 1, in which tooth tips (25) of the first edge teeth (23) of the middle section (12) are arranged radically within the tooth tips (28) of the other first teeth (16) of the middle section (12).

4. Planet (11) according to Claim 1, in which a tooth height which is configured in the middle section (12) from the groove bottom (17a) of the grooves (17) as far as the tooth tip (25) of the first edge tooth (23) is from approximately 50% to approximately 90% of the tooth height of the other first teeth (16).

5. Planet (11) according to Claim 1, in which the second engagement profile (15) of the end section (13) has a multiplicity of second teeth (19) which are arranged in an annular manner around the planet axis, in each case one second groove (20) which is arranged in an annular manner around the planet axis being configured between second teeth (19) which follow one another, an intermediate section (27) being configured between the tooth tips (25) of the first edge tooth (23) and a second edge tooth (24) of the end section (13) which lies closest to the middle section (12), which intermediate section (27) tapers along the planet axis in the direction of the end section (13).

6. Planet according to Claim 1, in which an intermediate section (27) is configured between the middle section (12) and the two end sections (13), which intermediate section (27) extends in the axial direction between the tooth tip (25) of the first edge tooth (23) and the tooth tip (26) of the adjacent second edge tooth (24).

7. Method for producing a planet according to Claim 1, according to the following steps:
provision of a planet blank (11a) which has a thicker middle section (12a) along its planet axis and thinner end sections (13a) which lie at both axial ends of the middle section (12a), a transition section (27a) which tapers from the middle section (12a) in the direction of the end section (13a) being configured between the middle section (12a) and the end section (13a);
rolling of the first and the second engagement profile (14, 15) into the circumferential face of the middle section (12a) and the end sections (13a), a circumferential face of the transition section (27a) of the planet blank (11a) being formed in the free material flow under a forming force into an intermediate section (27) of the planet (11), which intermediate section (27) lies between tooth tips (25, 26) of the two first and second edge teeth (23, 24) which are arranged adjacently with respect to one another.

8. Method according to Claim 7, in which the intermediate section (27) extends in the radial direction between the tooth tips (25, 26) of the first and the second edge teeth (23, 24).

9. Method according to Claim 7, in which the planet blank (11a) with the cylindrical middle section (12a), the cylindrical end sections (13a) and the transition sections (27a) which are arranged between the middle section (12a) and the end sections (13a) is manufactured by way of extrusion.

10. Method according to Claim 7, in which the extruded planet blank (11a) is ground in a subsequent grinding process.

11. Method according to Claim 9, in which the two engagement profiles (14, 15) and the journals (13a) which adjoin the free ends of the end sections (13a) integrally are rolled on the planet blank (11a).

12. Method according to Claim 11, in which the planet (11) is hardened in a heat treatment process after rolling of the engagement profiles (14, 15) and the journals (13a).

13. Apparatus for carrying out the method according to Claim 8, with a flat die (30), having two flat jaws (31) which are provided, on the sides which face one another, in each case with a rolling profile (33, 35) for rolling the two engagement profiles (14, 15) and journals (13a), the two flat jaws (31) being displaceable relative to one another, the rolling profile having a middle rolling profile (33) for rolling the first engagement profile (14), and an outer rolling profile (35) for rolling the second engagement profiles (15) and the journals (13a), and a roll-free transition region without contact with the planet blank (11a) being configured in the transition between the middle rolling profile (33) and the outer rolling profile (35).

## Revendications

1. Planétaire (11) pour une vis d'entraînement à roulement planétaire, le long de l'axe de planétaire duquel sont réalisées une portion centrale (12) de plus grand diamètre et, axialement des deux côtés de la portion centrale (12), une portion d'extrémité respective de plus petit diamètre (13), un premier profil d'engagement (14) étant réalisé au niveau de la surface d'enveloppe du planétaire (11) dans la portion centrale (12) et un deuxième profil d'engagement respectif (15) étant réalisé à chaque fois dans les portions d'extrêmité (13), le premier profil d'engagement (14) présentant une pluralité de premières dents (16) disposées sous forme annulaire autour de l'axe de planétaire, une première rainure (17) disposée sous forme annulaire autour de l'axe du planétaire étant à chaque fois réalisée entre des premières dents successives (16), **caractérisé en ce que** les deux premières dents de bord (23) de la portion centrale (12), placées aux extrémités de la portion centrale (12), sont réalisés à l'intérieur et à distance d'un contour de dent (18) associé aux premières dents (16) de la portion centrale (12).

2. Planétaire (11) selon la revendication 1, dans lequel des flancs de dent (21) des premières dents (16) présentent des premières pistes de contact de roulement disposées coaxialement autour de l'axe de planétaire pour l'engagement d'une broche filetée, les deux premières dents de bord (23) de la portion centrale (12) présentant, par rapport aux autres premières dents (16) de la portion centrale (12), une plus faible épaisseur de dent sur un rayon (w) de la piste de contact de roulement, autour de l'axe planétaire.

3. Planétaire (11) selon la revendication 1, dans lequel les pointes de dent (25) des premières dents de bord (23) de la portion centrale (12) sont disposées radialement à l'intérieur des pointes de dent (28) des autres premières dents (16) de la portion centrale (12).

4. Planétaire (11) selon la revendication 1, dans lequel une hauteur de dent réalisée dans la portion centrale (12) depuis le fond de rainure (17a) des rainures (17) jusqu'à la pointe de dent (25) de la première dent de bord (23) représente approximativement 50 % à approximativement 90 % de la hauteur de dent des autres premières dents (16).

5. Planétaire (11) selon la revendication 1, dans lequel le deuxième profil d'engagement (15) de la portion d'extrémité (13) présente une pluralité de deuxièmes dents (19) disposées sous forme annulaire autour de l'axe de planétaire, une deuxième rainure (20) disposée à chaque fois sous forme annulaire autour de l'axe de planétaire étant réalisée entre des deuxièmes dents successives (19), une portion intermédiaire (27) étant réalisée entre les pointes de dent (25) de la première dent de bord (23) et une deuxième dent de bord (24) de la portion d'extrémité (13) placée à côté de la portion centrale (12), laquelle portion intermédiaire se rétrécit le long de l'axe de planétaire dans la direction de la portion d'extrémité (13).

6. Planétaire selon la revendication 1, dans lequel une portion intermédiaire (27) est réalisée entre la portion centrale (12) et les deux portions d'extrémité (13), laquelle s'étend dans la direction axiale entre la pointe de dent (25) de la première dent de bord (23) et la pointe de dent (26) de la deuxième dent de bord adjacente (24).

7. Procédé de fabrication d'un planétaire selon la revendication 1, comprenant les étapes suivantes :
fourniture d'une ébauche de planétaire (11a) qui présente, le long de son axe de planétaire, une portion centrale plus épaisse (12a) et des portions d'extrémité plus minces (13a) placées aux deux extrémités axiales de la portion centrale (12a), une portion de transition (27a) se rétrécissant depuis la portion centrale (12a) dans la direction de la portion d'extrémité (13a) étant réalisée entre la portion centrale (12a) et la portion d'extrémité (13a) ;
roulage du premier et du deuxième profil d'engagement (14, 15) dans la surface d'enveloppe de la portion centrale (12a) et des portions d'extrémité (13a), une surface d'enveloppe de la portion de transition (27a) de l'ébauche de planétaire (11a) étant façonnée dans un flux de matériau libre par l'application d'une force de déformation pour former une portion intermédiaire (27) du planétaire (11) placée entre les pointes de dent (25, 26) des deux première et deuxième dents de bord (23, 24) disposées de manière adjacente l'une à l'autre.

8. Procédé selon la revendication 7, dans lequel la portion intermédiaire (27) s'étend dans la direction radiale entre les pointes de dent (25, 26) de la première et de la deuxième dent de bord (23, 24).

9. Procédé selon la revendication 7, dans lequel l'ébauche de planétaire (11a) est fabriquée par extrusion avec la portion centrale cylindrique (12a), les portions d'extrémité cylindriques (13a) ainsi que les portions de transition (27a) disposées entre la portion centrale (12a) et les portions d'extrémité (13a).

10. Procédé selon la revendication 7, dans lequel l'ébauche de planétaire extrudée (11a) est meulée dans un procédé de meulage subséquent.

11. Procédé selon la revendication 9, dans lequel les deux profils d'engagement (14, 15) ainsi que les tourillons (13a) se raccordant d'une seule pièce aux extrémités libres des portions d'extrémité (13a) sont formés par roulage sur l'ébauche de planétaire (11a).

12. Procédé selon la revendication 11, dans lequel le planétaire (11), après le roulage des profils d'engagement (14, 15) et des tourillons (13a), est durci dans un procédé de traitement thermique.

13. Dispositif pour mettre en oeuvre le procédé selon la revendication 8, comprenant un outil à mâchoires plates (30), présentant deux mâchoires plates (31) qui sont pourvues au niveau de leurs côtés tournés l'un vers l'autre à chaque fois d'un profil de roulage (33, 35) pour le roulage des deux profils d'engagement (14, 15) et des tourillons (13a), les deux mâchoires plates (31) pouvant être déplacées l'une par rapport à l'autre, le profil de roulage présentant un profil de roulage central (33) pour le roulage du premier profil d'engagement (14), ainsi qu'un profil de roulage extérieur (35) pour le roulage des deuxième profils d'engagement (15) et des tourillons (13a) et une région de transition sans roulage étant réalisée sans contact avec l'ébauche de planétaire (11a) au niveau de la transition entre le profil de roulage central (33) et le profil de roulage extérieur (35).
